Europäisches Patentamt

European Patent Office

Office européen des brevets

(11) Numéro de publication: **0 195 365 B1**

## FASCICULE DE BREVET EUROPEEN

(45) Date de publication de fascicule du brevet:
**22.01.92**

(51) Int. Cl.⁵: **A23L 1/305**, A23L 1/314,
A21D 2/26, A23J 3/00

(21) Numéro de dépôt: **86103344.7**

(22) Date de dépôt: **12.03.86**

(54) **Préparation de produits alimentaires gélifiés.**

(30) Priorité: **19.03.85 CH 1209/85**

(43) Date de publication de la demande:
**24.09.86 Bulletin 86/39**

(45) Mention de la délivrance du brevet:
**22.01.92 Bulletin 92/04**

(84) Etats contractants désignés:
**CH DE FR IT LI NL SE**

(56) Documents cités:
**EP-A- 0 129 346**
**FR-A- 2 261 712**
**US-A- 4 103 038**
**US-A- 4 362 761**

**JOURNAL OF FOOD SCIENCE, vol. 45, 1980,
pages 1237-1242, Institute of Food Technologists; K. YAMAUCHI et al.: "Emulsifying properties of whey protein"**

**JOURNAL OF FOOD SCIENCE, vol. 51, no. 2,
march-avril 1986, pages 440-444,449; R. JOST
et al.: "Heat gelation of oil-in-water emulsions stabilized by whey protein"**

(73) Titulaire: **SOCIETE DES PRODUITS NESTLE
S.A.**
**Case postale 353**
**CH-1800 Vevey(CH)**

(72) Inventeur: **Bächler, Robert**
**Av. Reller 32**
**CH-1804 Corsier-sur-Vevey(CH)**
Inventeur: **Fosseux, Pierre-Yves**
**95, imp. des Framboisiers**
**F-50000 Saint-Lo(FR)**
Inventeur: **Jost, Rolf**
**Ch. de Béranges 265**
**CH-1814 La Tour-de-Peilz(CH)**

Rank Xerox (UK) Business Services

## Description

La présente invention se rapporte à la préparation de produits alimentaires gélifiés.

La consistance de gel peut être obtenue par l'action d'un agent épaississant sur un milieu aqueux. La prise en gel peut intervenir : par simple dissolution dans le milieu aqueux par exemple de gommes ou de pectines; par dissolution dans le milieu aqueux par exemple d'amidons, de dérivés d'amidon, d'oeuf ou de fraction d'oeuf suivie d'une cuisson; par dissolution à chaud dans le milieu aqueux par exemple d'une gélatine et refroidissement de la solution. L'amidon, les gommes, les pectines et les gélatines ont un bon pouvoir épaississant mais pas de propriétés émulsifiantes. Par contre, les protéines d'oeuf ont à la fois les propriétés émulsifiantes et épaississantes requises pour préparer des émulsions gélifiées. Mais ces propriétés n'existent que lorsque les oeufs sont frais. Par ailleurs les oeufs frais, en plus de leur coût élevé, ne sont pas sans présenter des risques de contamination, doivent être employés rapidement et sont délicats à manipuler.

On a cherché à remplacer au moins en partie les oeufs dans leurs applications culinaires, notamment dans celles qui nécessitent l'emploi d'oeufs frais mais ne comprennent pas la prise en gel ultérieure par cuisson, par exemple dans la confection d'émulsions huile dans l'eau du genre des mayonnaises et les sauces à salade, par des protéines d'origine lactique, par exemple de petit-lait.

Le brevet des Etats-Unis No. 3.892.873, par exemple, décrit la préparation de sauces à salade et de mayonnaises incorporant des protéines de petit-lait partiellement dénaturées thermiquement et destinées à servir d'émulsifiant et d'épaississant à la place du jaune d'oeuf. Dans ces émulsions, l'huile représente 50 à 80% en poids, cette proportion élevée étant nécessaire à l'obtention de la consistance voulue.

EP-A-129.346 concerne un procédé de préparation d'une base à faible teneur en lipides ayant une texture et procurant une sensation en bouche semblables à celles de produits à haute teneur en lipides. Cette base sert à préparer des sauces à salades et des crèmes aigres, liquides. Le procédé consiste à mélanger à sec un concentrat de protéines de lactosérum et un lipide, à disperser le mélange dans un milieu aqueux, à faire passer la dispersion dans un moulin colloïdal, puis dans un homogénéisateur et à chauffer la dispersion de manière à augmenter la viscosité, en régime dynamique dans un échangeur à surface râclée par un traitement thermique de courte durée. Les produits obtenus ne sont pas des gels fermes mais des liquides visqueux.

On connaît d'autres applications des protéines de petit-lait dans les systèmes émulsionnés. La demande de brevet européenne publiée No. 52.899, par exemple, montre l'incorporation d'un concentrat de protéines de petit-lait dans la phase aqueuse de crèmes tartinables contenant peu de matières grasses qui sont des émulsions eau dans l'huile. Leur préparation nécessite une inversion des phases difficile à contrôler. Les protéines servent dans ce cas à améliorer la sensation en bouche mais ne contribuent pas à la gélification qui nécessite l'emploi d'additifs épaississants.

De plus, selon L. Razanajatovo, C. Alais et R. Paul, Le Lait 578, 483-495 (1978) et 581-582, 34-45 (1979), par exemple, la formation de gels par la chaleur à partir de dispersions de protéines de petit-lait doux nécessite la présence de saccharose (578, p. 488), de températures supérieures à 100°C (578, p.490) et de calcium disponible (581-582, p.43).

Enfin, des protéines de petit-lait sont disponibles sur le marché à l'état sec. Elles ont certes une qualité microbiologique acceptable mais leur salubrité est généralement obtenue par un traitement thermique au cours duquel elle perdent leur aptitude à la gélification.

Nous avons trouvé qu'on pouvait tirer parti des propriétés émulsifiantes et gélifiantes à la cuisson connues des protéines de petit-lait pour préparer dans certaines conditions d'émulsification des émulsions huile dans l'eau de qualité microbiologique appropriée gélifiées thermiquement sans recourir à l'emploi d'additifs épaississants et/ou émulsifiants et sans nécessité d'ajouter du calcium.

La présente invention concerne un procédé de préparation d'un produit alimentaire gélifié, dans lequel on prépare une émulsion huile dans l'eau à partir d'un milieu aqueux et d'un milieu lipidique, ladite émulsion contenant 4 à 12 %, exprimé en poids par volume, de protéines de petit-lait gélifiables et 2,5 à 40%, exprimé en volume, de lipides puis on gélifie thermiquement l'émulsion. Ce procédé est caractérisé par le fait qu'on homogénéise le milieu aqueux avec le milieu lipidique à 40-60°C en un ou plusieurs passages à une pression d'au moins 20 MPa dans un homogénéisateur à un étage ou à une pression d'au moins 15 MPa à chaque étage ou à une pression d'au moins 20 MPa dans le premier étage et d'au moins 10 MPa dans le deuxième étage dans un homogénéisateur à deux étages, de sorte que l'émulsion obtenue présente une famille homogène de globules gras de diamètres compris entre 140 et 6000 nanomètres et de diamètre moyen inférieur à 1000 nanomètres, que le rapport pondéral protéine:lipide est de 0,1:1 à 0,85:1 et que l'on effectue le traitement thermique de gélification de l'émulsion à 80-250°C pendant 5 à 90 min.

Par protéines de petit-lait gélifiables, on entend que celles-ci ont gardé pratiquement intactes leurs propriétés fonctionnelles du point de vue du pouvoir gélifiant. On peut vérifier si elles conviennent de la manière suivante: leur dispersion à une concentration correspondant à 10% en poids dans l'eau à un pH de 6,8-7 doit produire un gel ferme, auto-porteur, par traitement à 90°C pendant 30 min. Dans le présent exposé, le poids des protéines est exprimé comme azote total x 6,38.

Les protéines peuvent avoir été isolées à partir du petit-lait par toute méthode douce permettant de préserver leur caractère gélifiable tel que défini ci-dessus, par exemple selon B. Mirabel et R. Gaudal, 1981, Rev. Laitière Franc. 400, 77-81 ou E. Palmer, 1977, Process Biochem. 13, 242-49.

Elles sont de préférence sous forme de concentrats obtenus par ultrafiltration de petit-lait doux (par exemple après coagulation de la caséine par la présure) suivie éventuellement d'une diafiltration (ultrafiltration avec dilution), contenant avantageusement 50-95 % et de préférence 70-90% de protéines en poids des matières sèches.

Par rapport à une dispersion de la protéine de petit-lait dans l'eau, les émulsions huile dans l'eau préparées selon l'invention de même concentration en protéines présentent une viscosité supérieure conférant une plus grande fermeté aux gels obtenus par traitement thermique. Ainsi plus l'émulsion contiendra d'huile, par exemple au-dessus de 15 % en volume, moins la concentration en protéines requise pour obtenir un gel ferme sera élevée. De préférence, la concentration en protéines correspondra à 4-8,5 % en poids / volume.

Bien que cela ne soit pas indispensable, le milieu aqueux peut contenir, outre les protéines, d'autres substances comestibles solubles ou dispersibles, par exemple des sucres, notamment du glucose, du fructose, du saccharose, du lactose de même que des arômes, des colorants, des sels minéraux divers. En outre, il peut contenir un agent de conservation, par exemple un agent anti-mycotique tel que le sorbate de potassium.

Le pH du milieu aqueux déterminera le pH de l'émulsion. Il peut être ajusté avant ou après l'émulsification avec le milieu lipidique. Pour ce faire on peut ajouter soit au milieu aqueux contenant le cas échéant les autres substances mentionnées ci-dessus, soit à l'émulsion contenant ce milieu aqueux des acides ou des bases de qualité alimentaire, par exemple l'acide chlorhydrique, l'acide sulfurique, l'acide lactique, l'acide citrique, l'acide acétique ou l'hydroxyde de sodium, l'hydroxyde de potassium, le carbonate de sodium, le carbonate de potassium. Le pH peut être de 3,5 à 8. En dessous de 3,5 et au dessus de 8, les gels ne se forment pas et les émulsions restent liquides malgré le traitement thermique. Dans la gamme acide, de pH 3,5-4,5, la gélification est possible et on obtient des gels lisses et tendres. Cette zone de pH convient particulièrement à la production par exemple de crèmes tartinables, de mayonnaises et de sauces à salade. La gamme de pH 4,5-8 convient à la préparation de gels lisses et fermes. Elle est préférée pour produire par exemple des omelettes, des oeufs brouillés, des crêpes, des quiches, des émulsions de viande gélifiées, par exemple des saucisses, des flans, des gelées ou des puddings.

Le milieu lipidique peut être constitué de différentes matières grasses d'origine végétale ou animale qui doivent être liquides à la température d'émulsification soit à 40-60°C et qui peuvent se présenter elles-mêmes sous forme d'émulsion.

Parmi les lipides d'origine animale, on peut citer les graisses de porc ou de boeuf, le jaune d'oeuf ou les lipides d'origine lactique, par exemple la crème, le beurre, l'huile de beurre, les fractions d'huile de beurre. Parmi les lipides d'origine végétale, on peut citer par exemple le beurre de cacao, ses équivalents et substituts, les huiles d'olive, d'arachide, de soja, de tournesol, de maïs, de carthame, de pépins de raisin, de pépins de cassis ou encore de telles huiles hydrogénées.

On peut ajouter si nécessaire, un antioxydant dans le milieu aqueux ou de préférence dans le milieu lipidique, par exemple le butylhydroxyanisol, le butylhydroxytoluène, l'$\alpha$-tocophérol, le palmitate d'ascorbyle etc...., la nature de celui-ci et la quantité ajoutée étant choisies en fonction de la méthode et de la durée de conservation souhaitées.

A concentration en protéines constante, la viscosité des émulsions obtenues après émulsification augmente considérablement avec la concentration en lipides. A titre d'exemple, la viscosité dynamique apparente à 25°C, mesurée comme indiqué ci-après, des émulsions contenant 5 % en poids par volume de protéines augmente depuis environ 3mPa.s (millipascal x seconde) pour une concentration de 10 % en volume de lipides jusqu'à une valeur supérieure à 50 mPa.s pour une concentration de 40 % en volume de lipides. La mesure a été effectuée au moyen d'un appareil Rhéomat-115® (Contraves AG) avec une vitesse de rotation variant de 0 à 350 rpm, respectivement de 0 à 112 rpm dans le cas des émulsions très visqueuses. Le gradient des vitesses couvrait 5 min. et la vitesse maximum était maintenue pendant 5 min., après quoi la lecture était faite.

Ainsi les concentrations en protéines et en lipides et le rapport protéines:lipides seront choisis en fonction de la nature, de la texture plus ou moins ferme et des propriétés nutritionnelles de produits préparés. Par exemple, lorsqu'il s'agit de produits de genre des flans, des gelées, des omelettes ou des puddings, l'émulsion contiendra de préférence 5-8,5 % en poids par volume de protéines de petit-lait et de préférence 10-20 % en volume de lipides, le rapport protéines:lipides en poids par volume étant 0,25:1 - 0,85:1.

Dans le cas de crèmes tartinables, ces valeurs seront de préférence respectivement 4-8 % et 20-40 %, le rapport protéines: lipides étant de 0,1:1-0,4:1.

Pour préparer l'émulsion, on peut mélanger le milieu aqueux avec le milieu lipidique, par exemple dans un moulin colloïdal, puis l'homogénéiser à 40-60°C et de préférence à environ 50°C dans un homogénéisateur à 1 ou 2 étages, en un ou plusieurs passages jusqu'à ce que l'émulsion présente une seule famille homogène de globules gras dont les diamètres se trouvent dans la plage indiquée ci-dessus et le diamètre moyen est inférieur à 1000 nanomètres et de préférence 350 à 800 nanomètres. En variante, on peut effectuer l'homogénéisation des deux milieux directement sans avoir recours au mélange préalable dans un moulin colloïdal.

Le degré d'homogénéité obtenu dépendra du type d'homogénéisateur utilisé et des conditions d'homogénéisation. A titre indicatif au moins trois passages dans un homogénéisateur à soupapes de laboratoire à deux étages, chacun à une pression d'environ 18 MPa (mégapascal) produisent un gel ferme, la finesse de l'émulsion augmentant avec le nombre de passages. Dans un appareil industriel à un seul étage à une pression d'environ 20 MPa et dans un appareil industriel à deux étages chacun à une pression de 15 MPa, un seul passage suffit pour obtenir ultérieurement un gel ferme. De préférence, on utilisera des pressions supérieures et un nombre plus grand de passages permettant de restreindre la plage des diamètres et de diminuer le diamètre moyen des globules gras, ce qui correspond à une augmentation de la finesse de l'émulsion.

Pour produire un gel, on traite thermiquement l'émulsion obtenue à 80-250°C, pendant 5 à 90 min.. Bien entendu, température et durée de chauffage sont liées. Ainsi, si l'on désire fabriquer un produit du genre d'une crème, une température de l'ordre de 90°C à pression atmosphérique et une durée de l'ordre de 15 min. suffisent. Pour obtenir un gel plus ferme, par exemple pour préparer un flan ou un pudding, on préfère verser l'émulsion dans des récipients que l'on ferme hermétiquement, puis l'on procède au traitement thermique dans les récipients, par exemple en autoclave à 115°C pendant 15 à 30 min.. En variante, toujours pour préparer des gels fermes, on peut traiter l'émulsion par exemple à environ 95°C pendant environ 45 min. à la pression atmosphérique. Enfin, lorsqu'on désire préparer des produits cuits à la poêle ou au four, par exemple des crêpes, omelettes ou quiches, on peut traiter l'émulsion à 150-250°C pendant 5 à 35 min..

L'émulsion homogénéisée et gélifiée peut constituer le produit alimentaire que l'on désire préparer. C'est par exemple le cas des gelées, sauces à salade ou crèmes tartinables.

En variante, on peut sécher l'émulsion homogénéisée, par pulvérisation ou par séchage sous vide, par exemple par lyophilisation sans provoquer sa gélification et entreposer le produit intermédiaire ainsi obtenu en vue d'une utilisation ultérieure, le cas échéant après reconstitution dans un milieu aqueux, par exemple de l'eau ou du lait.

Selon un mode de préparation préféré d'un tel produit intermédiaire, on effectue un prétraitement thermique de l'émulsion en vue d'en diminuer fortement la charge microbienne préalablement à son séchage. Pour ce faire, on peut ajuster le pH de celle-ci à environ 2,5-3 ou 9, par addition selon le cas d'un acide ou d'une base de qualité alimentaire, puis la traiter à une température inférieure ou égale à 80°C de préférence de 70-80°C pendant 20 à 30 min.. On peut ensuite neutraliser l'émulsion traitée thermiquement à un pH d'environ 7 par addition selon le cas d'une base ou d'un acide de qualité alimentaire, puis la sécher ou en variante la sécher au pH du traitement thermique, la neutralisation ayant alors lieu lors de la reconstitution dans un milieu aqueux préalablement à la gélification.

Alternativement, on peut réaliser le traitement thermique comme précédemment d'une dispersion de la protéine, par exemple d'un rétentat d'ultrafiltration de petit-lait contenant de préférence environ 7 % de matières sèches, puis concentrer la dispersion et la sécher après l'avoir le cas échéant neutralisée. Dans ce cas l'émulsification a lieu après reconstitution par dilution dans un milieu aqueux.

Nous avons constaté que le traitement thermique précédent, qu'il soit appliqué à une émulsion ou à une dispersion, ne modifiait pratiquement pas les propriétés gélifiantes de la protéine, ce qui est particulièrement avantageux car cela met à disposition un produit intermédiaire de salubrité et de pouvoir gélifiant satisfaisants dont l'emploi peut être différé.

L'émulsion homogénéisée peut être utilisée dans des produits culinaires gélifiés, en remplacement partiel ou total des oeufs, des épaississants ou des gélifiants. On peut citer à titre d'exemple les flans, les quiches, les omelettes, les crêpes ou les saucisses. Dans ces cas, on ajoutera à l'émulsion homogénéisée et le cas échéant séchée et reconstituée, le reste des ingrédients entrant dans la composition des produits culinaires en question et on effectuera ensuite le traitement thermique de gélification.

4

Le procédé selon l'invention présente certains avantages spécifiques :
- Il utilise les protéines du petit-lait et valorise ce sous-produit en alimentation humaine,
- Il permet d'incorporer des huiles liquides, par exemple des huiles riches en acides gras insaturés dans des produits de texture solide. Les gels obtenus ont des qualités nutritionnelles appréciées en diététique puisqu'ils combinent des protéines de petit-lait, de grande valeur nutritionnelle, aux huiles diététiques riches en acides gras essentiels,
- Du fait qu'il s'agit d'émulsions huile dans l'eau, il n'y a aucune nécessité de procéder à la délicate inversion des phases pour obtenir la consistance des crèmes tartinables, et celles-ci peuvent de ce fait être hypocaloriques par rapport aux produits traditionnels de consistance comparable,
- Les gels obtenus sont hypocholestérolémiques comparativement aux produits de texture semblable à base d'oeuf.

Les exemples ci-après, dans lesquels les parties et pourcentages sont pondéraux sauf indication contraire, illustrent l'invention.

Dans ceux-ci, les diamètres des globules gras et leur distribution ont été déterminés par diffraction de la lumière laser, par exemple selon B. Berne et R. Pecora, dans "Dynamic light scattering with applications in chemistry, biology and physics", J. Wiley and Sons, New York 1976. A partir des données de diffraction de la lumière, on établit des courbes de distribution des fréquences dont on peut déduire les diamètres des globules gras et le pourcentage de globules gras ayant un diamètre donné. Si on reporte en coordonnées orthogonales les diamètres en abscisses et les pourcentages en ordonnées, on obtient une expression quantitative de la répartition des globules gras dans l'émulsion. Ainsi, une émulsion homogène sera caractérisée par une courbe à un seul sommet. Une pluralité de courbes distinctes ou une courbe à plusieurs sommets seront caractéristiques d'une émulsion hétérogène à plusieurs familles de globules. A partir d'une courbe de distribution cumulative en %, on peut déduire les dimensions extrêmes des globules d'une même famille et leur diamètre moyen tiré de la formule :

$$\text{Diamètre moyen} = \frac{\Sigma X \cdot d\emptyset}{\Sigma d\emptyset}$$

dans laquelle :     X est le diamètre moyen en nanomètres d'une classe de globules compris dans une plage de diamètres donnée,

d$\emptyset$ est le pourcentage de globules compris dans la plage en question.

La fermeté des gels a été déterminée en mesurant la force mécanique nécessaire pour rompre le gel (rupture) ou pour le comprimer à un degré donné (déformation) à l'aide d'un analyseur de texture Instron, par exemple selon M.C. Bourne dans "Food texture and viscosity", Academic Press, New York and London, 1983, Chapitre 3 et p. 176-185. Pour effectuer ces mesures, on a découpé les gels en cylindres de 30 mm de hauteur et 28 mm de diamètre. La surface de contact entre le gel et le disque de compression de l'appareil était 6,16 cm$^2$. On a déterminé le % de déformation par une force appliquée de 0,98 N (déformation) ainsi que la force nécessaire à la rupture du gel (rupture).

Exemple 1

On mélange à 50° C un milieu aqueux contenant un concentrat de protéines de petit-lait (obtenu par ultrafiltration de petit-lait doux, contenant 81 % de protéines, sur matières sèches), de pH 6,9 avec de l'huile de pépins de raisin dans les proportions indiquées. L'émulsification a lieu dans un homogénéisateur de laboratoire à soupapes à 2 étages sous une pression de 18 MPa à chaque étage par 5 passages successifs. On remplit des récipients en verre par rangée de 4 avec les émulsions obtenues et on chauffe les récipients au bain marie 30 min. à 90° C. On plonge ensuite les récipients dans la glace et on démoule les produits. On évalue la fermeté des gels après 1h au repos (rupture). Les résultats sont indiqués dans le tableau 1 ci-après.

Tableau 1

| % de protéines (en poids/volume) % d'huile (en volume/volume) | 4 | 6 | 8 | 10 | 12 |
|---|---|---|---|---|---|
| 2,5 | 0 | 2 | 3 | 4 | 4 |
| 5 | 0 | 2 | 3 | 4 | 4 |
| 7,5 | 0 | 2 | 3 | 4 | 4 |
| 10 | 0 | 2 | 3 | 4 | 4 |
| 15 | 1 | 2 | 3 | 4 | 4 |
| 20 | 1 | 3 | 4 | 4 | - |
| 30 | 1-2 | 3 | 4 | 4 | - |
| 40 | 2 | 3 | 4 | - | - |

Légende :

0 : limite de gélification

1 : gel très faible, fermeté non mesurable

2 : gel faible, auto-porteur, fermeté $< 0,5$ N/cm$^2$

3 : gel moyen, fermeté jusqu'à 1 N/cm$^2$

4 : gel fort, fermeté $> 1$ N/cm$^2$

- : non déterminé

Exemple comparatif

On effectue l'émulsification à 50° C d'un mélange contenant 7,5 % en poids/volume de protéines de petit-lait, le milieu aqueux représentant 85 % et le milieu lipidique 15 % en volume du mélange :

I Au moyen d'un mélangeur de laboratoire pendant 2 min.

II Avec un moulin colloïdal pendant 2 min.

III Avec l'homogénéisateur à soupapes comme ci-dessus.

IV Avec un homogénéisateur à soupapes à un seul étage, en un seul passage.

On analyse les globules gras des émulsions. On prépare des gels comme ci-dessus et on analyse leur fermeté. Les résultats sont indiqués dans le tableau 2 ci-après.

Tableau 2

| | Technique d'émulsification | | | |
|---|---|---|---|---|
| | I | II | III | IV |
| Nombre de familles de globules gras | 2(2 courbes distinctes) | 2(2 courbes distinctes) | 1 | 2(1 courbe à 2 sommets) |
| Diamètres des globules de la famille principale (nanomètre, nm) | 650-8000 | 1000-8000 | 140-1800 | 370-8000 |
| Diamètre moyen des globules (nm) | 2400 | 2150 | 430 | 1340 |
| % des globules de diamètre : | | | | |
| < 3000 nm | 80 | 70 | – | 64 |
| < 2000 nm | 27 | 25 | 100 | 40 |
| < 1000 nm | 10 | 5 | 84 | 9 |
| gélification | non | non | oui | non |

– : non déterminé.

Malgré des compositions identiques, seule l'émulsion III présente une seule famille de globules. Son homogénéité est excellente, le diamètre moyen des globules est petit et la distribution des diamètres est étroite. C'est la seule émulsion gélifiable produisant un gel ferme.

Les autres émulsions montrent plusieurs familles, un diamètre moyen des globules élevé et une distribution très large des diamètres. Les émulsions I et II restent entièrement liquides et l'émulsion IV présente seulement un commencement de gélification.

Exemple 2

On utilise les mêmes conditions que dans l'exemple 1 pour préparer une émulsion contenant 7,5 % en poids/volume de protéines de petit-lait, 85 % en volume de milieu aqueux et 15 % en volume d'huile de pépins de raisin, sauf que l'on fait varier le nombre de passages dans l'homogénéisateur. Les propriétés des émulsions et des gels obtenus dans les mêmes conditions que dans l'exemple 1 sont indiquées dans le tableau 3 ci-après.

## Tableau 3

| | Nombre de passages | | | | | |
|---|---|---|---|---|---|---|
| | 1 | 3 | 6 | 10 | 15 | 20 |
| **Propriétés des émulsions** | | | | | | |
| Nombre de familles de globules | 2 | 1 | 1 | 1 | 1 | 1 |
| Diamètre moyen des globules (nm) | 2164 | 651 | 580 | 475 | 396 | 389 |
| % des globules de diamètre > 1000 nm | 88 | 55 | 40 | 18 | 7 | 6 |
| **Propriétés des gels** | | | | | | |
| Apparence | très mou | ferme | ferme | très ferme | très ferme | très ferme |
| Déformation par 1 force de 0,98N (%) | 23 | 12,5 | 11 | 9,8 | 9,7 | 8,7 |
| Force de compression provoquant une rupture (N/cm$^2$) | 0,35 | 1,79 | 2 | 2,23 | 2,21 | 2,27 |

Les résultats ci-dessus montrent que l'émulsion devient homogène et plus fine après 3 passages. Corrélativement le gel obtenu n'est ferme que si l'homogénéisation est poussée.

Exemple 3

On prépare une émulsion contenant 8,4 % en poids par volume de protéines de petit-lait sous forme de concentrat avec différents milieux lipidiques dans les proportions indiquées ci-après, à 50°C et à pH 7 en utilisant l'homogénéisateur de l'exemple 1 dans les mêmes conditions de pression à chacun des deux étages, mais en 4 passages.

Les propriétés des gels obtenus dans les mêmes conditions que dans l'exemple 1 sont indiquées dans le tableau 4 ci-après (valeurs obtenues en faisant la moyenne de celles d'une série de 4 gels).

## Tableau 4

| Nature de l'huile et % dans l'émulsion (en volume) | | Propriétés des gels | |
|---|---|---|---|
| | | Déformation par 1 force de 0,98N (%) | Force de compression provoquant une rupture (N/cm$^2$) |
| Huile d'olive | 10 | 26,3 | 0,23 |
| | 15 | 15 | 0,84 |
| | 20 | 9,1 | 1,74 |
| Huile de pépins de raisin | 10 | 24,2 | 0,39 |
| | 15 | 19,1 | 1,61 |
| | 20 | 8,8 | 1,83 |
| Huile d'arachide | 10 | 24,2 | 0,55 |
| | 15 | 16 | 1,28 |
| | 20 | 9,8 | 2,87 |
| Huile de carthame | 10 | 24,6 | 0,42 |
| | 15 | 13,5 | 1,95 |
| | 20 | 7,3 | 3,91 |

Exemple 4

On traite un concentrat liquide obtenu par ultrafiltration de petit-lait doux provenant de la fabrication de gruyère contenant en pourcentage des matières sèches 83,9 % de protéines, 5 % de lipides et 3,3 % de cendres dont 0,68 % de calcium (le complément à 100 % étant le lactose), par diafiltration contre 6 fois son volume de solution aqueuse de tampon citrate de sodium 0,05 M à pH 3,2 et à la température de 5-8°C.

Le rétentat obtenu contient, en pourcentage des matières sèches, 80,4 % de protéines, 0,09 % de calcium et 5,42 % de citrate, c'est-à-dire qu'il contient seulement 12 % du calcium initial et que le rapport molaire citrate:calcium est 13:1 comparé à 0,14:1 dans le concentrat de petit-lait non diafiltré.

On prépare à partir du rétentat diafiltré une émulsion contenant 4 % en poids/volume de protéines et 1 mM de Calcium à pH 7 avec de l'huile de pépins de raisin dans les conditions d'homogénéisation de l'exemple 3.

Les propriétés des gels obtenus dans les mêmes conditions que dans l'exemple 1 sont indiquées dans le tableau 5 ci-après (valeurs moyennes de 4 gels)

9

Tableau 5

| % d'huile dans l'émulsion (en volume) | Propriété des gels | |
| | Déformation par 1 force de 0,98N (%) | Force de compression provoquant une rupture (N/cm$^2$) |
| --- | --- | --- |
| 10 | 33 | 1,83 |
| 15 | 10,2 | 3,21 |

Les résultats ci-dessus montrent que les émulsions gélifient très bien malgré une très faible concentration de calcium et un excès molaire de 13 fois de citrate par rapport au calcium dans le milieu aqueux (ce qui signifie que tout le calcium résiduel doit être chélaté par le citrate et qu'il n'est par conséquent pas disponible pour réagir avec la protéine).

Il apparaît que les ions calcium ne jouent pas un rôle déterminant dans la gélification.

Exemple 5

On disperse 2,4 kg de concentrat de protéines de petit-lait de pH 6,9 dans 31,6 kg d'eau et on y ajoute 6 l d'huile de maïs sous agitation. Après ajustement du volume à 40 l par addition d'eau, on chauffe la dispersion à 50°C et on l'envoie dans un moulin colloïdal. On traite ensuite la pré-émulsion obtenue, à l'exception d'une petite partie (à titre de comparaison) dans un homogénéisateur industriel Manton-Gaulin à 50°C avec différentes conditions d'homogénéisation (voir Tableau 6 ci-après), puis on analyse les globules gras dans les émulsions comme indiqué précédemment.

On remplit 5 boîtes de conserve en métal avec chacune 150 g d'émulsion, dont une avec la pré-émulsion non homogénéisée (à titre de comparaison). On ferme les boîtes hermétiquement et on les place dans un autoclave à 100°C pendant 30 min. Après refroidissement en bain de glace, on ouvre les boîtes et on analyse les gels avec l'appareil Instron comme indiqué précédemment.

Les conditions d'homogénéisation et les résultats des analyses sont indiqués dans le tableau 6 ci-après.

On voit que l'émulsion la plus fine et la plus homogène (1 seul étage, 30 MPa) produit le gel le plus ferme tandis qu'aucun gel n'est obtenu sans homogénéisation.

## Tableau 6

| | Conditions d'homogénéisation | | | | |
|---|---|---|---|---|---|
| | Sans homogénéisation (comparaison) | 1 étage 20 MPa | 1 étage 30 MPa | 2 étages 15 MPa puis 5 MPa | 2 étages 15 MPa puis 15 MPa |
| **Propriétés des émulsions** | | | | | |
| Nombre de familles | – | 1 | 1 | 1 | 1 |
| Diamètre moyen des globules (nm) | – | 866 | 662 | 1069 | 756 |
| Dimensions des globules (nm) | – | 168-4072 | 142-2890 | 168-5349 | 142-3295 |
| % des globules de diamètre: ≤1000nm | | 71 | 86 | 61 | 79 |
| ≤2000nm | | 92 | 99 | 89 | 99 |
| **Propriétés des gels (valeur moyenne de 5 gels)** | | | | | |
| Apparence | pas de gélification | gel ferme | gel ferme | gel mou | gel ferme |
| Déformation par 1 force de 0,98N (%) | | 28,9 | 23 | 36,1 | 28,7 |
| Force de compression provoquant une rupture (N/cm$^2$) | | 1 | 1,2 | 0,65 | 1,15 |

– : non déterminé

Exemple 6

On disperse 1 l de rétentat d'ultrafiltration de petit-lait à 14 % de matières sèches et 80 % de protéine sur matières sèches dans de l'eau à pH 6,9 jusqu'à un volume de 2 l.

On acidifie 1 l de cette dispersion à pH 3 avec 37 ml d'une solution d'HCl 2N et on porte le pH de l'autre 1 à 9 avec 7 ml d'une solution d'NaOH 2N.

Afin de réduire le nombre de germes viables, on traite thermiquement les deux préparations à 75°C pendant 20 minutes. On les neutralise à pH 7 avec respectivement 37 ml d'une solution d'NaOH 2N et 7 ml d'une solution d'HCl 2N puis on les sèche par lyophilisation.

Avec ces deux concentrats protéiques thermisés et séchés, on prépare deux émulsions dans les mêmes conditions que dans l'exemple 1 et du même type que dans l'exemple 2.

Les propriétés des gels obtenus sont indiquées dans le tableau 7 ci-après.

Tableau 7

|  | Déformation par 1 force de 0,98 N (%) | Force de compression provoquant une rupture (N/cm$^2$) |
|---|---|---|
| Gel avec un concentrat thermisé à pH 3 | 14,4 | 1,31 |
| Gel avec un concentrat thermisé à pH 9 | 18,1 | 1,27 |

On constate que les gels sont fermes, et donc que le traitement thermique des rétentats dans les conditions indiquées n'affecte pas les propriétés gélifiantes des protéines.

Exemple 7

On utilise les mêmes conditions que dans l'exemple 1 pour préparer 1 l d'émulsion contenant 6 % en poids/volume de protéines de petit-lait, 85 % en volume aqueux et 15 % en volume d'huile, sauf que la phase aqueuse est acidifiée à pH 3 avec 16 ml d'une solution d'HCl 2N, avant l'homogénéisation.

Afin de réduire le nombre de germes viables, on traite thermiquement l'émulsion 30 min. à 80°C puis on la neutralise à pH 7 avec 15 ml d'une solution d'NaOH 2N. On forme des gels comme dans l'exemple 1 et on évalue leurs propriétés. Les résultats sont indiqués ci-après.

Déformation par 1 force de 0,98N (%) : 21,8

Force de compression provo quant une rupture (N/cm$^2$) : 0,56

On constate que le traitement thermique de l'émulsion dans les conditions indiquées n'affecte par les propriétés gélifiantes des protéines.

Exemple 8

Préparation d'omelettes ou de crêpes

On prépare un milieu aqueux en dispersant 1 kg de concentrat de protéines de petit-lait à 80 % de protéines dans 7 l d'eau contenant 200 g de chlorure de sodium. On ajuste le pH de la dispersion à 7 en ajoutant de l'hydroxyde de sodium et on complète le volume à 8,5 l avec de l'eau. Au milieu aqueux préalablement chauffé à 55°C, on ajoute alors en mélangeant 1,46 kg d'un milieu lipidique chauffé à 55°C contenant, en volume 80 % d'huile d'arachide et 20 % d'huile de tournesol. On envoie ensuite le mélange dans un moulin colloïdal puis on l'homogénéise dans un homogénéisateur industriel Manton-Gaulin à un seul étage sous une pression de 20 MPa.

On sèche alors l'émulsion homogénéisée par pulvérisation et on obtient une poudre dont la composition est la suivante :

|  | % |
|---|---|
| Protéines | 31 |
| Lipides totaux | 52,9 |
| Cendres | 9,5 |
| Lactose | 3 |
| Humidité | 3,6 |

On disperse 25 g de l'émulsion séchée et 40 g de farine de blé dans 50 ml d'eau, on verse la pâte dans 150 ml de lait écrémé en agitant et on y ajoute des épices.

Par cuisson dans une poêle à environ 200°C pendant 5 min., on obtient des omelettes ou crêpes d'excellente consistance, dont le goût est neutre et la couleur blanche par rapport à une omelette ou crêpe à base d'oeufs.

Exemple comparatif

A titre de comparaison, on prépare des crêpes de la manière traditionnelle (A) et code indiqué ci-dessus (B) à partir d'ingrédients dans les proportions indiqués dans le tableau 8 ci-après :

Tableau 8

| Ingrédients % | A | B |
|---|---|---|
| Farine de blé | 30 | 30 |
| Oeufs entiers liquides | 50 | - |
| Emulsion séchée | - | 15 |
| Lait écrémé | 20 | 55 |

Celles-ci ont un pourcentage de cholestérol et une valeur calorique indiqués ci-après :

|  | A | B |
|---|---|---|
| **Cholestérol %** | 0,25 | 0,005 |
| **Valeur calorique par 100g** | | |
| Kilojoules (KJ) | 821 | 1001 |
| Kilocalories (Kcal) | 196,3 | 239,2 |

On voit que l'aliment gélifié préparé selon l'invention (B) peut être hypercalorique tout en ayant un apport en cholestérol négligeable par rapport au produit traditionnel à base d'oeufs (A).

Exemple 9

Préparation de puddings ou de gelées

On disperse 1 kg de concentrat de protéines de petit-lait à 80 % de protéines dans 8 l d'eau contenant 0,3 kg de sirop de framboise. On ajuste le poids du milieu aqueux à 10 kg par addition d'eau et son pH à 7,5 en ajoutant de l'hydroxyde de sodium. On mélange ensuite au milieu aqueux 2 kg de beurre préalablement fondu à 50°C qu'on homogénéise alors comme dans l'exemple 8. L'homogénéisat est ensuite versé dans des boîtes de conserve en métal de 50 ml, les boîtes sont fermées hermétiquement et placées pendant 20 min. à 110°C dans un autoclave.

Après refroidissement les boîtes sont ouvertes et on démoule un gel brillant. Ce gel est un pudding pouvant être mangé à la cuiller, de goût agréable et produisant une sensation en bouche plaisante.

Exemple 10

Préparation de crèmes tartinables pauvres en matières grasses

13

On disperse 750 g d'un concentrat de protéines de petit-lait à 80 % de protéines dans 8 l d'eau. On y ajoute 60 g de chlorure de sodium et 10 g de sorbate de potassium, puis on ajuste le pH du milieu aqueux à 3,3 à l'aide d'acide citrique et son poids à 10 kg avec de l'eau. On mélange ensuite en agitant 70 volumes du milieu aqueux à 30 volumes d'un milieu lipidique contenant, en volume, 50 % d'huile de maïs, 25 % d'huile de soja et 25 % d'huile de tournesol, les deux milieux ayant été préalablement chauffés à 50°C.

On homogénéise alors le mélange dans un homogénéisateur industriel Manton-Gaulin à deux étages, le premier à 20 MPa et le second à 10 MPa. On verse ensuite l'émulsion dans des barquettes en matière plastique de 100 ml qu'on ferme hermétiquement et qu'on place dans un autoclave à 100°C pendant 30 min.

Quand on ouvre les barquettes une fois refroidies, on constate qu'elles contiennent un gel crémeux brillant, de texture lisse, facilement tartinable avec un couteau. La crème procure une sensation en bouche agréable. Elle contient 30 g de lipides.

Exemple comparatif

On prépare une crème tartinable (B) comme ci-dessus mais à partir, en volume, de 25 % de milieu lipidique et 75 % de milieu aqueux. A titre de comparaison, on prépare une crème tartinable traditionnelle de consistance comparable (A) sous forme d'une émulsion eau dans l'huile à partir des mêmes ingrédients. La composition des produits et leur valeur calorique sont indiquées dans le tableau 9 ci-après.

## Tableau 9

| Composition % | A | B |
|---|---|---|
| Matières grasses | 40 | 25 |
| Protéines | 2 | 4,5 |
| Eau | 58 | 70,5 |

### Valeur calorique par 100 g

| | A | B |
|---|---|---|
| KJ | 1590 | 1050 |
| Kcal | 380 | 251 |

La crème tartinable préparée selon l'invention (B) est pauvre en calories par rapport au produit traditionnel (A) dont il est très difficile de diminuer la concentration en matières grasses sans inverser l'émulsion.

Exemple 11

Préparation de flans

On prépare une émulsion huile dans l'eau à partir de 80 parties d'un milieu aqueux contenant 9,6 % de concentrat de protéines de petit-lait à 83,3 % de protéines et de 20 parties de beurre préalablement fondu à 50°C, puis on l'homogénéise comme à l'exemple 8.

L'homogénéisat est destiné à remplacer une partie des oeufs dans une recette de flan traditionnelle (témoin).

Pour préparer les flans, on mélange l'homogénéisat avec du lait, des oeufs entiers préalablement homogénéisés séparément et du sucre puis on verse le mélange dans des pots qu'on ferme hermétiquement et qu'on place dans un autoclave à 95°C pendant 45 min.

Les proportions des ingrédients et les caractérisitiques de texture des flans obtenus sont indiquées dans le tableau 10 ci-après.

## Tableau 10

| % de remplacement de l'oeuf par l'homogénéisat | Ingrédients % | | | | Texture |
|---|---|---|---|---|---|
| | Lait entier | Oeufs | Sucre | Homogénéisat | |
| 0 (témoin) | 65 | 25 | 10 | - | lisse, fermeté moyenne |
| 50 | 57,5 | 12,5 | 10 | 20 | lisse, moins ferme que le témoin |
| | 47,5 | 12,5 | 10 | 30 | équivalent ou témoin |
| 75 | 47,5 | 6,25 | 10 | 30 | lisse, moins ferme que le témoin |
| | 37,5 | 6,25 | 10 | 40 | équivalent au témoin |

Tous les flans obtenus ont une belle texture souple et lisse. Si l'on n'homogénéise pas les oeufs entiers préalablement à leur mélange avec les autres ingrédients, les flans obtenus ont une texture souple et lisse et présentent de monbreuses bulles. On obtient des résultats semblables en mélangeant avec les autres ingrédients un homogénéisat préalablement séché comme à l'exemple 8.

Exemple 12

Préparation de quiches

On prépare une émulsion huile dans l'eau à partir de 83 parties d'un milieu aqueux contenant 6,5 % de protéines de petit-lait et de 17 parties d'huile d'arachide ou de beurre préalablement fondu, puis on l'homogénéise et on sèche, le cas échéant, l'homogénéisat, en suivant la procédure de l'exemple 8. L'homogénéisat est destiné à remplacer les oeufs dans une recette de quiche traditionnelle servant de témoin.

Pour préparer la base pour quiches traditionnelles, on mélange des oeufs entiers, de la crème fraiche, du lait et de l'amidon de maïs dans les proportions indiquées dans le tableau 11 ci-après.

On place ensuite la base dans un moule contenant de la pâte à tarte et on cuit les quiches dans un four à 230°C pendant 35 min.

15

Tableau 11

| Echantillon | Homogénéisat | Ingrédients % | | | |
|---|---|---|---|---|---|
| | | Oeufs | Crème | Lait entier ou 1/2 écrémé | Amidon de maïs |
| Témoin | - | 72 | 6 | 15 | 7 |
| I | 18 | 54 | 6 | 15 | 7 |
| II | 36 | 36 | 6 | 15 | 7 |
| III | 54 | 18 | 6 | 15 | 7 |
| IV | 72 | - | 6 | 15 | 7 |
| v | 36 | 36 | - | - | - |
| VI | 54 | 18 | - | - | - |

Les échantillons sont assez proches les uns des autres. Leur dureté est décroissante avec la quantité d'oeufs mais leur texture est tout à fait acceptable. L'échantillon IV a un développement moins important au four.

On obtient également de bons résultats en utilisant seulement l'homogénéisat séché dont le milieu lipidique est du beurre, et reconstitué avec de l'eau ou du lait jusqu'à 20 % de matières sèches.

Exemple 13

Préparation de saucisses

On prépare une émulsion huile dans l'eau à partir de 83 parties d'un milieu aqueux contenant 6,5 % de protéines de petit-lait et de 17 parties de premier jus de boeuf fondu, puis on l'homogénéise en suivant la procédure de l'exemple 8.

Dans un cutter, on broie et on mélange les ingrédients ci-après dans les proportions indiquées :

| | % |
|---|---|
| Viande maigre de boeuf | 19 |
| Viande grasse de porc | 13 |
| Graisse de porc solide | 11 |
| Viande maigre de porc | 19 |
| Glace pilée | 19 |
| Epices | 4 |
| Homogénéisat | 15 |

On remplit ensuite des boyaux avec le mélange broyé, on ferme les boyaux et on les cuit à 85°C pendant 40 min.. Les saucisses obtenues sont comparables aux saucisses traditionnelles préparées en utilisant une émulsion grasse obtenue en mélangeant de la graisse de boeuf liquide, du caséinate et de l'eau à la place de l'homogénéisat.

**Revendications**

1. Procédé de préparation d'un produit alimentaire gélifié dans lequel on prépare une émulsion huile dans l'eau à partir d'un milieu aqueux et d'un milieu lipidique, ladite émulsion contenant 4 à 12%, exprimé en poids par volume, de protéines de petit-lait gélifiables et 2,5 à 40%, exprimé en volume, de lipides puis on glifie thermiquement l'émulsion, caractérisé par le fait qu'on homogénéise le milieu aqueux avec le milieu lipidique à 40-60°C en un ou plusieurs passages à une pression d'au moins 20 MPa dans un homogénéisateur à un étage ou à une pression d'au moins 15 MPa à chaque étage ou à une pression d'au moins 20 MPa dans le premier étage et d'au moins 10 MPa dans le deuxième étage dans un homogénéisateur à deux étages, de sorte que l'émulsion obtenue présente une famille homogène de globules gras de diamètres compris entre 140 et 6000 nanomètres et de diamètre moyen inférieur à 1000 nanomètres, que le rapport pondéral protéine:lipide est de 0,1:1 à 0,85:1 et que l'on effectue le traitement thermique de gélification de l'émulsion à 80-250°C pendant 5 à 90 min.

2. Procédé selon la revendication 1, caractérisé par le fait que les protéines de petit-lait gélifiables sont sous forme de concentrat obtenu par ultrafiltration de petit-lait doux contenant 50-95% et de préférence 70-90% de protéines, en poids des matières sèches.

3. Procédé selon la revendication 1, caractérisé par le fait que l'on ajuste le pH du milieu aqueux à 2,5-3 ou 9 préalablement à l'émulsification ou après celle-ci par addition d'acides ou de bases de qualité alimentaire, qu'on effectue un traitement thermique du milieu aqueux ou de l'émulsion à température inférieure ou égale à 80°C pendant 20 à 30 min, puis que l'on sèche l'émulsion homogénéisée, le cas échéant après l'avoir neutralisée, sans provoquer sa gélification et qu'on l'entrepose en en tant que produit intermédiaire en vue d'une utilisation ultérieure.

4. Procédé selon la revendication 1, caractérisé par le fait que le mileu lipidique est choisi parmi les huiles végétales, les lipides d'origine lactique, les graisses de porc ou de boeuf et le jaune d'oeuf.

5. Procédé selon l'une des revendications 1 à 4, caractérisé par le fait que l'émulsion contient, exprimé en poids par volume 5-8,5% de protéines de petit-lait et 10-20%, exprimé en volume, de lipides, que le rapport protéines de petit-lait:lipides exprimé en poids par volume est 0,25:1-0,85:1 et qu'on ajuste le pH du milieu aqueux à 4,5-8.

6. Procédé selon l'une des revendications 1 à 4, caractérisé par le fait que l'émulsion contient, exprimé en poids par volume, 4-8% de protéines de petit-lait et 20-40%, exprimé en volume, de lipides, que le rapport protéines de petit-lait:lipides exprimé en poids par volume est 0,1:1-0,4:1 et qu'on ajuste le pH du milieu aqueux à 3,5-4,5.

7. Procédé selon la revendication 1 ou 3, caractérisé par le fait qu'on ajoute à l'émulsion homogénéisée et le cas échéant séchée, des ingrédients entrant dans la composition des flans, quiches, crêpes ou émulsions de viande préalablement au traitement thermique de gélification.

**Claims**

1. A process for the preparation of a gelled food product in which an oil-in-water emulsion is prepared from an aqueous medium and a lipidic medium, said emulsion containing from 4 to 12%, expressed as weight by volume, of gellable whey proteins and from 2.5 to 40%, expressed as volume, of lipids and the emulsion thus prepared is thermally gelled, characterized in that the aqueous medium is homogenized with the lipidic medium in one or more passes at 40 to 60°C under a pressure of at least 20 MPa in a single-stage homogenizer or under a pressure of at least 15 MPa in the each stage or under a pressure of at least 20 MPa in the first stage and at least 10 MPa in the second stage of a two-stage homogenizer so that the emulsion obtained contains a homogeneous series of fat globules having diameters of from 140 to 6000 nanometres and a mean diameter of less than 1000 nanometres, in that the protein to lipid ratio by weight is from 0.1:1 to 0.85:1 and in that the emulsion is subjected to the thermal gelling treatment for 5 to 90 mins. at 80 to 250°C.

2. A process as claimed in claim 1, characterized in that the gellable whey proteins are in the form of a concentrate obtained by ultrafiltration of sweet whey containing from 50 to 95% and preferably from 70 to 90% by weight proteins, based on dry matter.

3. A process as claimed in claim 1, characterized in that the pH of the aqueous medium is adjusted to 2.5-3 or to 9 before or after emulsification by addition of food-grade acids or bases, after which the aqueous medium or the emulsion is heat-treated for 20 to 30 minutes at a temperature of or below 80°C, the homogenized emulsion is then dried, optionally after neutralization, without being caused to gel and is then stored as an intermediate product pending subsequent use.

4. A process as claimed in claim 1, characterized in that the lipidic medium is selected from vegetable oils, lipids of lactic origin, lard or beef tallow and egg yolk.

5. A process as claimed in any of claims 1 to 4, characterized in that the emulsion contains 5-8.5% by weight/ volume of whey proteins and 10-20% by volume of lipids, in that the ratio of whey proteins to lipids in weight by volume is 0.25:1-0.85:1 and in that the pH value of the aqueous medium is adjusted to 4.5-8.

6.  A process as claimed in any of claims 1 to 4, characterized in that the emulsion contains 4-8% by weight/volume of whey proteins and 20-40% by volume of lipids, in that the ratio of whey proteins to lipids in weight by volume is 0.1:1-0.4:1 and in that the pH value of the aqueous medium is adjusted to 3.5-4.5.

7.  A process as claimed in claim 1 or 3, characterized in that ingredients involved in the composition of egg custards, quiches, pancakes or meat emulsions are added to the homogenized and optionally dried emulsion before the thermal gelling treatment.

**Patentansprüche**

1.  Verfahren zur Herstellung eines gelierten Nahrungsmittelprodukts, bei dem man ausgehend von einem wäßrigen Medium und einem Lipidmedium eine Emulsion Öl-in-Wasser herstellt, wobei diese Emulsion 4 bis 12 %, ausgedrückt in Gewicht pro Volumen, gelierbare Molkenproteine und 2,5 bis 40 %, ausgedrückt in Volumina, Lipide enthält, und man dann die Emulsion thermisch geliert, dadurch **gekennzeichnet,** daß man das wäßrige Medium mit dem Lipidmedium bei 40-60 ° C und in einem oder mehreren Durchgängen bei einem Druck von wenigstens 20 MPa durch einen einstufigen Homogenisierapparat oder bei einem Druck von wenigstens 15 MPa in jeder Stufe oder bei einem Druck von wenigstens 20 MPa in der ersten Stufe und von wenigstens 10 MPa in der zweiten Stufe durch einen zweistufigen Homogenisierapparat homogenisiert, und zwar so, daß die erhaltene Emulsion eine homogene Gruppe von Fettkügelchen mit Durchmessern im Bereich von 140 bis 6000 nm und einem mittleren Durchmesser von weniger als 1000 nm bildet, wobei das Gewichtsverhältnis Protein : Lipid von 0,1:1 bis 0,85:1 beträgt, und daß man die thermische Gelierbehandlung der Emulsion bei 80-250 ° C für 5 bis 90 min durchführt.

2.  Verfahren nach Anspruch 1, dadurch gekennzeichnet, daß die gelierbaren Molkenproteine in Form eines Konzentrats vorliegen, das man durch Ultrafiltration einer Süßmolke erhalten hat und das einen Gehalt von 50-95 % und vorzugsweise von 70-90% Proteine, bezogen auf das Gewicht der Trockenfeststoffe, aufweist.

3.  Verfahren nach Anspruch 1, dadurch gekennzeichnet, daß man den pH des wäßrigen Mediums durch Zugabe von Säuren oder Basen von Nahrungsmittelqualität auf 2,5-3 oder 9 vor dem Emulgieren oder danach einstellt, daß man eine thermische Behandlung des wäßrigen Mediums oder der Emulsion unterhalb oder bei 80 ° C für 20 bis 30 min durchführt, daß man danach die homogenisierte Emulsion trocknet, gebenenfalls nachdem man sie neutralisiert hat, ohne ein Gelieren zu provozieren, und daß man sie als solche im Hinblick auf eine spätere Verwendung als Zwischenprodukt einlagert.

4.  Verfahren nach Anspruch 1, dadurch gekennzeichnet, daß man das Lipidmedium auswählt aus Pflanzenölen, Lipiden aus Milch, Schweine- oder Rinderfett und Eigelb.

5.  Verfahren nach einem der Ansprüche 1 bis 4, dadurch gekennzeichnet, daß die Emulsion, ausgedrückt in Gewicht pro Volumen, 5-8,5 % Molkenproteine und, ausgedrückt in Volumina, 10-20% Lipide enthält, wobei das Verhältnis der Molkenproteine zu den Lipiden, ausgedrückt in Gewicht pro Volumen, 0,25:1 - 0,85:1 beträgt, und daß man den pH des wäßrigen Mediums auf 4,5-8 einstellt.

6.  Verfahren nach einem der Ansprüche 1 bis 4, dadurch gekennzeichnet, daß die Emulsion, ausgedrückt in Gewicht pro Volumen, 4-8% Molkenproteine und 20-40%, ausgedrückt in Volumina, Lipide enthält, wobei das Verhältnis der Molkenproteine zu den Lipiden, ausgedrückt in Gewicht pro Volumen, 0,1:1 - 0,4:1 beträgt, und daß man den pH des wäßrigen Mediums auf 3,5-4,5 einstellt.

7.  Verfahren nach Anspruch 1 oder 3, dadurch gekennzeichnet, daß man der homogenisierten und gegebenenfalls getrockneten Emulsion die Zutaten hinzufügt, die zu Pudding-, Omelett- oder Eierkuchenzusammensetzungen oder Fleischemulsionen gehören, bevor man die thermische Gelierbehandlung durchführt.